# EUROPEAN PATENT SPECIFICATION

(11) **EP 1 724 600 B1**
(45) Date of publication and mention of the grant of the patent: **19.07.2017**
(21) Application number: 05255470.6
(22) Date of filing: 07.09.2005
(51) Int. Cl.: G01S 19/30

(54) **A system and method for acquisition of signals**
System und Verfahren zur Signalakquisition
Système et procédé pour l'acquisition des signaux

(30) Priority: 10.05.2005 GB 0509533
(43) Date of publication of application: 22.11.2006
(73) Proprietor: STMicroelectronics (Research & Development) Limited, Marlow, Buckinghamshire SL7 1YL (GB)
(72) Inventor: Mattos, Philip, Ruardean Woodside Glos. GL17 9UB (GB)
(74) Representative: Style, Kelda Camilla Karen

(56) References cited:
- WO-A1-2005/006011
- US-A- 4 468 793
- US-A- 4 578 678
- US-B1- 6 873 664
- ZHU Y ET AL: "A new signature sequence scheme for CDMA with good mean-square correlation properties" WIRELESS COMMUNICATIONS AND NETWORKING CONFERENCE, 1999. WCNC. 1999 IEEE NEW ORLEANS, LA, USA 21-24 SEPT. 1999, PISCATAWAY, NJ, USA,IEEE, US, 21 September 1999 (1999-09-21), pages 564-568, XP010353600 ISBN: 0-7803-5668-3
- ZHU Y ET AL: "A new family of polyphase sequences for CDMA with good odd and even correlation properties" SIGNAL PROCESSING ADVANCES IN WIRELESS COMMUNICATIONS, 1999. SPAWC '99. 1999 2ND IEEE WORKSHOP ON ANNAPOLIS, MD, USA 9-12 MAY 1999, PISCATAWAY, NJ, USA,IEEE, US, 9 May 1999 (1999-05-09), pages 198-202, XP010345742 ISBN: 0-7803-5599-7
- KARKKAINEN K H A ET AL: "Performance Of An Asynchronous DS/SSMA (DS/CDMA) System With Kronecker Sequences" 23 September 1991 (1991-09-23), , PAGE(S) 191-197 , XP010212288 * abstract *
- MIZUTANI K ET AL: "Design of pseudo-noise sequences for a spread spectrum communication and ranging system" 3 October 2000 (2000-10-03), INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, PAGE(S) 418-423 , XP010528973 ISBN: 0-7803-6363-9 * the whole document *

## Description

The present invention relates to a system and method for the acquisition of signals and, in particular, but not exclusively to the acquisition of spread spectrum navigation signals such as used in global navigation satellite systems GNSS. The present invention also relates to the acquisition and tracking of broadcast pseudo random codes, in particular codes transmitted as part of a GPS or GNSS signal.

One example of a global navigation satellite system is the Global Positioning System GPS. The global position system (GPS) uses satellites orbiting the earth in known orbit paths with accurately known positions. These satellites transmit signals which can be received by a receiver on earth. Using signals received from four satellites, the receiver is able to determine its position using trigonometry. The signals transmitted by the satellite comprise pseudo-random codes. The accuracy of the determination of position is dependent on factors such as the repetition rate of the code, the components of the receiver and atmospheric factors.

The accuracy of measurement can be improved if the signals from more than four satellites are taken into account. GPS receivers can receive signals from up to twelve satellites at a time.

GALILEO is a European initiative for a global navigation satellite system which provides a global positioning service. It has been proposed that the GALLILEO be interoperable with GPS and GLONASS, the two other global satellite navigation systems. It should be appreciated that the term GNSS is used in this document to refer to any of these global positioning systems.

GALILEO has a system of thirty satellites, twenty-seven operational satellites with three operational in-orbit spares. The proposed frequency spectrum for GALILEO has two L-bands. The lower L-band, referred to as E5a and E5B, operate in the region of 1164 MHz to 1214 MHz. There is also an upper L-band operating from 1559 MHz to 1591 MHz.

The frequency signals themselves are called the carriers. Since the carriers are pure sinusoids, they have two binary codes modulated onto them. The two binary codes are the C/A (coarse acquisition) codes and the P (precise) code.

Information on the coordinates of the satellite is also sent within the messages broadcast by the satellite and is modulated onto the carriers.

The coarse/acquisition (C/A code) was originally used as a coarse position measurement signal or as an acquisition code in order to assist locking onto the phase of the precise code. However, the C/A code is now used for acquisition and for position tracking. The C/A code is a pseudo-random (PN) binary code which consists of 1023 elements or chips that repeat every millisecond.

The C/A code is a Gold code. The cross correlation property of the Gold code is such that the correlation function between two different sequences is low. In other words, when a received signal is correlated with the correct C/A code the desired signal can be easily distinguished from other signals which appear as background noise.

In GPS and Galileo, signals are broadcast from satellites which include these pseudo random codes which are processed at a receiver to determine position data. The processing involves first determining the relative offset of the received codes with locally generated versions of the codes (acquisition) and then determining the position once the relative offset is determined (tracking). Both acquisition and tracking involve correlating received signals with a locally generated version of the pseudo random codes over an integration period.

In spread spectrum systems, acquisition is difficult because it is two dimensional. A further difficulty is that because the signals are much weaker inside as compared to outside, it is much more difficult to acquire signals indoors. In particular, the indoor operation of GNSS requires the reception of signals attenuated by at least 20dB from the outdoor equivalents.

The number of cells in the time domain is for example 2046. The number of cells in the frequency domain is 20 for outdoors at 1 KHz bandwidth or 2000 for indoors at 10Hz bandwidth. This latter number of cells can be reduced to 20 with a temperature controlled crystal oscillator TCXO. This means that the total number of cells to be searched is 2046 times 20 i.e. 40,000. For outdoors, each cell takes one millisecond and for indoor signals each cell would take 100 milliseconds, because of the weaker signal strength. This results in a search time of 40 seconds for outdoor or 4000 seconds for indoors on a single correlator.

This problem traditionally is addressed by using parallelism in the frequency domain, for example sixteen fast Fourier transform channels or by parallelism in the time domain, using parallel correlators. To achieve parallelism requires faster clocks and/or more hardware which is disadvantageous. Additionally, more hardware and/or faster clocks require increased power.

In any event, the fundamental limit is the stability of the reference clock which prevents bandwidth reduction to the degree required for indoor sensitivity.

As already mentioned the indoor signals can be attenuated by at least 20 dB from their outdoor equivalents. To increase the sensitivity by twenty dB in respect of the indoor signals means integrating for a hundred times longer. However, this is difficult to achieve because as the coherent integration period is extended, the bandwidth of the channel is narrowed. This in return requires many more searches to be carried out and eventually the stability of the reference oscillator becomes a limiting factor as a signal appears to wander from one frequency to another even before acquisition is completed. This results in a spreading of the energy, preventing further gain.

In addition, the modulation method used may provide a limit on the integration time.

Thus there are problems in performing integrations with such signals. The integration time is limited by the accuracy of a local clock and the frequency shifts caused by relative motion of the satellite and receiver.

One example of a conventional GPS receiver is described in US 4,468,793.

An example of GNSS receiver where an incoming signal is operated on by codes is given in WO 2005/006011.

It is an aim of embodiments of the invention to address one or more of these problems. The invention is defined by the claims. According to one aspect of the present invention there is provided a system for processing a received signal having at least one pseudorandom code, PRNorig, applied thereto, said received signal having a frequency, said system comprising: first correlator circuitry arranged to correlate the received signal with a first code to provide an output; second correlator circuitry arranged to correlate the received signal with a second code to provide an output; and characterised by processing means for processing the outputs of said first and second correlator circuitry wherein said processing means (62, 64, 66) is arranged to receive an output from said first correlator circuitry (54, 58) and an output from said second correlator circuitry (56, 60) and to perform a multiply operation, and to integrate the output of the multiply operation to cancel said frequency; wherein said first code and said second code are different; and_wherein said first code and second code when interleaved provide PRNorig, such that at any point one code is the same as PRNorig, the other code is 0.

According to a second aspect of the present invention there is provided a method for processing a received signal having at least one pseudorandom code, PRNorig, applied thereto, said received signal having a frequency, said method comprising the steps of: correlating the received signal with a first code; correlating the received signal with a second code; and characterised by processing results of the first and second correlating steps, said processing comprising receiving an output from said received signal correlated with said first code and receiving an output from said received signal correlated with said second code and performing a multiply operation, and then integrating the output of the multiply operation to cancel said frequency; wherein said first code and said second code are different; and wherein said first code and second code when interleaved provide PRNorig, such that at any point one code is the same as PRNorig, the other code is 0.

In one receiver embodying the invention, two or more signals derived from a transmitter having coherent carrier signals are multiplied by two or more local codes to produce signals of coherent carrier but independent noise. These signals are multiplied together to produce for example an output signal comprising sum and difference signals and then integrated over an integration period.

By multiplying signals together that are derived from the transmitter and which are coherent, the integration period is no longer limited by frequency drift either due to local clock variation or due to Doppler shift between the transmitter (satellite) and receiver. This is because the carrier signals are coherent. In a sense, one of the signals derived from the transmitter is used as a "local" oscillator signal for the other.

In a first example, the two or more local codes comprise first and second different codes corresponding to different codes within the signals derived from the transmitter. In the GALILEO example, these codes are two different codes relating to the L1B and L1C signals. These are transmitted on the same carrier, are multiplied in the receiver separately by the respective local b and c codes, and then these signals multiplied together.

In this example, the received signal may comprise two different codes broadcast at the same carrier frequency.

In a first embodiment, the two or more codes are derived from one code. Preferably there are two codes that are derived from one code corresponding to a code in the signal broadcast from one satellite. The two derived codes are orthogonal. This is achieved by taking a code sequence and sampling, for example, taking even samples and odd samples to generate two respective orthogonal codes. Such codes have zero cross correlation when synchronised.

The incoming received signal from one satellite comprising a mixture of signal and noise is multiplied by these two orthogonal codes derived from a local version of the code in the satellite signal. The resulting signals when multiplied together have zero frequency offset as the signals are derived from a single satellite signal. In this embodiment, the signal comprises a single code broadcast at a carrier frequency.

The techniques may be used in acquisition or tracking of signals. The second embodiment in which the local code is halved into odd and even samples is particularly useful for code acquisition.

The first example is particularly beneficial for the GALILEO system in which two separate codes are broadcast on the same carrier. The first embodiment is particularly beneficial for the GPS system in which a single code is broadcast on a carrier.

The embodiments of the invention may be embodied in a method of acquiring or tracking signals, in a semiconductor integrated circuit for processing, acquiring or tracking received broadcast signals or in a receiver for such.

For a better understanding of the present invention and as to how the same may be carried into effect, reference will now be made by way of example only to the accompanying figures, in which:
Figure 1 shows the despreading codes used in embodiments of the invention;
Figure 2 shows schematically one receiver arrangement;
Figure 3 shows another receiver arrangement;
Figure 4 shows Tricode Hexaphase signalling as used in the prior art;
Figure 5 shows Tricode Hexaphase signalling as used in the arrangement shown in Figure 3;
Figure 6 shows a timing diagram of the signalling shown in Figure 5.

The embodiments described are in relation to a GNSS receiver for GNSS signal acquisition and tracking. Embodiments of the present invention are particularly applicable to the GALILEO system and other satellite navigation systems such as the GPS system operated by the US government or any other global navigation satellite system.

It should be appreciated that whilst embodiments of the present invention have been used particularly in the context of acquisition of signals for global navigation satellite systems, embodiments of the present invention can be used for the acquisition of any other signals.

Embodiments of the present invention are particularly applicable to the acquisition of spread spectrum signals.

It should be appreciated that embodiments may be implemented to provide a software equivalent to the circuitry shown in the embodiments described hereinafter.

The acquisition circuitry can be incorporated in any suitable device which is to provide a positioning functionality. The device can be a portable device or part of a larger device. For example embodiments of the present invention can be incorporated in satellite navigation devices, communication devices such as mobile communication devices for example mobile phones or any device requiring position information. The satellite navigation devices can be stand alone devices or devices incorporated in various different forms of transport such as cars, trains, aeroplanes, balloons, ships, boats, trucks, helicopters or any other form of transport.

Preferred embodiments of the present invention, described below, are incorporated in an integrated circuit. However, it should be appreciated that alternative embodiments of the present invention may be at least partially implemented in discrete circuity.

The Galileo L1 BOC (Binary offset carrier) (1,1) signals offer the potential for effective indoor operation as needed for mass-market receivers, but achieving that economically, especially acquisition at low signal strengths, remains a challenge. Architectures already proposed for GPS come into their own with the vastly improved cross-correlation performance of the Galileo signal.

The BOC features of the signal are generally aids to accuracy, not acquisition, which they make significantly more difficult. However there are also attributes of the signals that make acquisition significantly less difficult. One is the presence of the pilot tone, i.e. no data on the L1c channel. This removes the limit of coherent integration presented by the unknown data bits. If time can be adequately known, then the NH (Newman Hoffman) codes present no problem to the acquisition engine, while greatly improving the cross-correlation performance by increasing the effective code-length from 4 to 100 milliseconds. Newman codes are known relatively short codes and are also provided on the L1c channel.

If there is no access to time, then the NH codes allow a tiered acquisition, saving processing MIPs (million instructions per seconds) over a single layer code of that length, but requiring a significant amount of memory for intermediate results, and giving great advantage to receivers with a software element, which can use memory flexibly.

However a major benefit in the signal format is the presence of two signals at the same frequency, synchronized perfectly at the carrier level. Additionally for acquisition purposes they are also synchronized at symbol level. The Carrier synchronization is guaranteed at the satellite by the phase angle definitions for the combination of the L1 a/b/c signals, so that the phase angle specifications ensure absolute frequency lock.

Given two carriers at precisely the same frequency, even though that frequency is relatively unknown due to satellite Doppler, user Doppler and reference oscillator error, advantage of this can be taken in the acquisition phase. This can be achieved by combining the signals in the receiver, thus effectively eliminating the unknown frequency, and separating the time domain acquisition from the frequency domain acquisition. In outdoor GPS we may have 20 KHz frequency search in 1 KHz bins and 2046 time domain bins making 40,000 searches to perform. Using these same parameters when frequency and time searches can be separated means 2046 plus 20 searches. About 95% saving in search time and MIPS can be achieved.

The Galileo code length is not yet published, since the change from BOC (2,2) to BOC(1,1). However we can expect the same percentage saving, but even more significant because the baseline processing load is about 8 times higher, due to the BOC (x2) and the expected code length (x4).

The above methodology gives a huge advantage, but is only viable when a coherent integration period of 4 milliseconds (one symbol) is appropriate, possibly extended by subsequent non-coherent integration. This is because it requires both L1b and L1c signals, and the L1b signal has data symbols on it. For deeply attenuated indoor signals, advantage of the data-free L1c signal to extend the coherent integration period can be taken. Thus the frequency search is required, so optimization of the time domain search is even more important.

If there is access to a time reference at the 4-millisecond level, it is possible to predict the NH code and thus eliminate it meaning that only 8192 time searches are required. For a totally unaided acquisition the NH-code cannot be predicted, meaning that the pilot signal on L1c would appear to be no better than the data-modulated L1b. However the data modulation is unknown, but the NH code, while unknown between 25 possible phases, does only have 25 possibilities, no matter if the desired integration period is 100ms or 1 second. Thus it is possible to perform integrations over single 4 millisecond epochs, and accumulate them into 25 independent sets of results. These 25 sets of results are then post-processed against the 25 possible phases of the NH code, one of them yielding a true coherent integration of the chosen length.

There are of course complexities. The coherent integration cannot be so long that it is incompatible with the width of the frequency bin, which itself must be wide enough to be compatible with the stability of the reference oscillator over the desired period. A set is a full correlation i.e. 8192 results. Even if carefully scaled to stay in a single byte, this is about 8kbytes per set, 200kbytes total. This amount of memory for intermediate results might not be viable on a hardware machine, where it could not be reused. However on a mixed hardware/DSP (digital signal processor) /CPU (computer processing unit) type implementation, it may be available for a short time before being reallocated either to tracking channels or to the CPU for application use.

A more efficient implementation may limit the number of intermediate results stored. However this may mean that an identity is stored with each result, extending its size. For example storing 100 results only, at 3 bytes each, would be 300 bytes per set, about 8 Kbytes total. Optimal performance would come from a triangular matrix, where say 8000 results are stored from the first epoch, then 4000+4000, then 2000+2000+2000+2000 etc, discarding earlier possibilities based on a temporary incoherent combination, or possibly running the NH possibilities in real time. However this may involve excessive complexity, certainly for a full hardware implementation, making the hardware-DSP-CPU architecture preferable again.

Embodiments of the present invention greatly reduce the parallelism required for a given sensitivity, saving silicon and power, and also vastly speeding up acquisition by separating the time domain acquisition from the frequency domain, meaning n+m cells to search, not n.x.m, a 95 % saving in the above examples.

In addition, it is resilient to unstable reference clocks, allowing the noise bandwidth to be reduced to extreme levels without missing the signal.

On a two-signal system, such as Galileo L1B/C, the signal can be acquired without precise knowledge of frequency by combining the information from each signal. They have identical Doppler shift from satellite movement, and identical Doppler shift from user motion, so after they have been separately de-spread and integrated to the level of bandwidth required, the two complex samples from each signal can be multiplied together and integrated again. The carrier element of each signal will have precisely the same frequency, therefore the product will be at zero Hz, DC, and thus can be synchronously integrated for 4 milliseconds (the period of the data symbol). Thus the L1B (data) signal can be demodulated with no precise knowledge of the frequency.

This results in a (data x NH code) stream, which can be multiplied by the known NH code to recover the data, initially synchronising by looking for (preamble x NH code). This is as described above.

In a first embodiment, the same task can be carried out on a single signal system such as GPS. To do this the GPSCA-code for a given satellite is split alternately into two components.

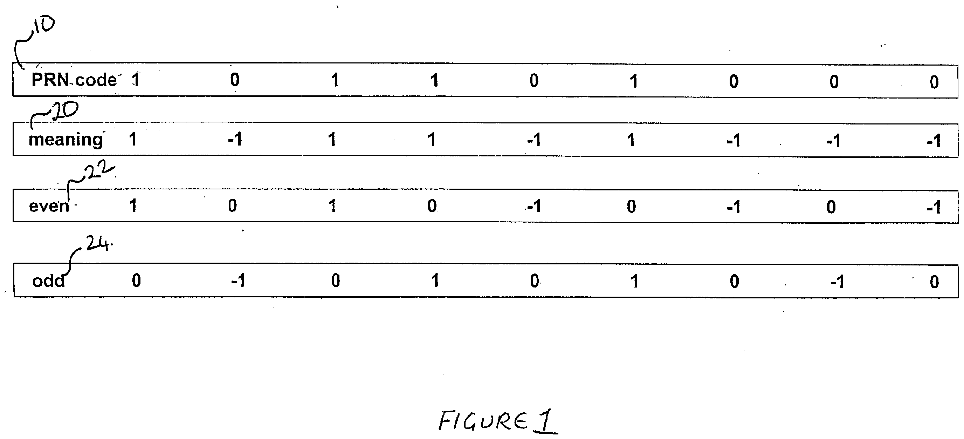

Reference is made to Figure 1 which shows how the GNSS C/A code for a given satellite is used in embodiments of the invention. The first line 10 is the pseudo-random number PRN code. This code consists of a series of 1s and 0s. The second line 20 shows the meaning of the PRN code. Thus, every "1" of the PRN code means "1" and every "0" means "-1".

In embodiments of the present invention the PRN code is split alternatively into two components 22 and 24. The sum of the two components gives the original code at any point. At any point one component is the same as the original C/A code and the other component is 0. The PRN code is effectively divided up into an even code 22 and odd code 22. The code of the PRN code is counted from zero so the first element of the PRN code is "even" code. In other words the odd and even codes are interleaved to provide the original code.

In alternative embodiments of the invention, the code can be split into two codes in any appropriate way. The code can be split for example so that the first m bits are in one code and the remaining n bits are in the other code. Alternatively, instead of alternative single bits, alternative k bits can be used, where k is an integer. For example if k is 2, then the first 2 bits are in one code and the third and fourth bits are in the other code and so on. The pattern for dividing the bits may be regular or may be pseudorandom. In some embodiments of the invention, the single code can be split into three or more codes.

It should be appreciated that there may a faster sampling rate than one per code chip. However, all of the samples of a particular chip are active in the same code, and zero in the other code.

The even and odd codes are used to despread the GNSS signals. This yields two quasi-independent outputs after integration. Each is 3dB down in signal strength from the conventional signal. However, there are now two of these signals and the noise is reduced. This means that the CNo (carrier to noise) loss is less than 3dB. A complex multiply is then performed between the two resulting streams and the integration is carried out again. This integration can be carried out without limit because in each stream there are identical carriers and identical BPSK (Binary phase shift keying) data. After multiplication and integration, the carrier and data are eliminated.

This yields only a DC value proportional to the power of the signal which can be used in a traditional early/late tracker. Because of this, the integration is self synchronous; no knowledge of data edges is required. Thus, integration for 1 second to a 1 Hz bandwidth would yield extreme sensitivity, unachievable in a system with conventional clocks that randomly wander by more than that in the search time involved (2046) searches.

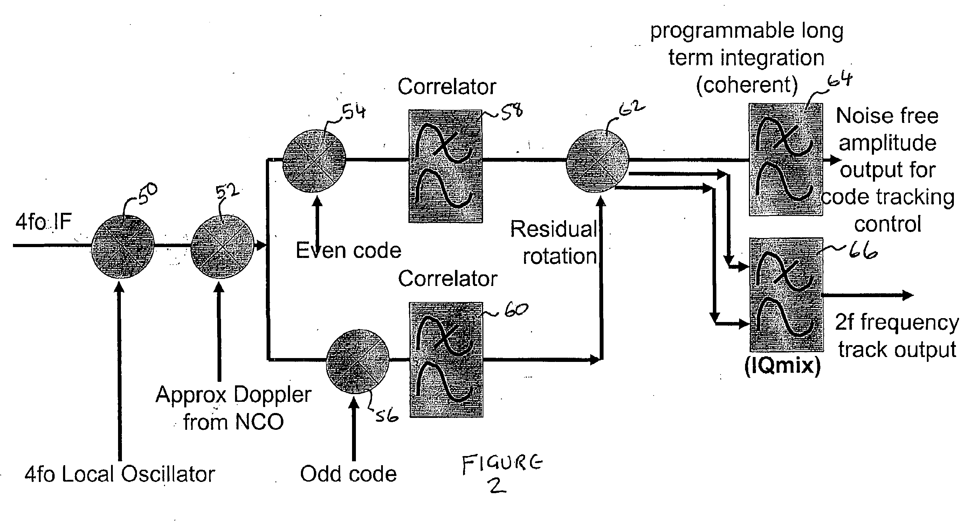

Reference is now made to Figure 2 which shows circuitry for implementing an embodiment of the present invention. It should be appreciated that in practice, implementation of the embodiment of the present invention may be achieved by a computer program, i.e. by a software implementation. This same circuitry may be used to implement the first example where two different codes are transmitted. The two different transmitted codes would be used instead of the odd and even codes of this embodiment illustrated in Figure 2.

The arrangement shown in Figure 2 shows the real part of the signal (the I part). It should be appreciated that components shown are arranged to handle the imaginary part of the signal, i.e. the Q part. The components are thus complex components. The information carried on the I and Q channels may be the same or different.

A first mixer 50 is provided. The first mixer receives an intermediate frequency signal at a frequency of 4fo. fo is 1.023MHz i.e. the nominal frequency. This signal contains the information carried on the L1c channel. The L1c channel is in the LI frequency range of 1563MHz -1587MHz. The L1c channel is a pilot channel which carries a pilot tone and a small amount of repeated data (25 bits). The primary code length is 8184. It should be appreciated that embodiments of the invention can be carried out on any other suitable signal.

This signal is mixed with a pure frequency signal of 4fo from a local oscillator. This produces a difference signal i.e. carrier component has been removed from the L1C signal. This different signal is output to a second mixer 52. The output of the first mixer will generally still have a small frequency component due to the effect of Doppler shift. The approximation of the Doppler shift is provided by a numerically controlled oscillator NCO.

Thus, any remaining frequency component of the signal due to Doppler shift has been removed by the second mixer 52. The output of the second mixer is input to a third mixer 54 as well as to a fourth mixer 56. There will be generally a small frequency element, generally at a still lower frequency due to error in the NCO signal.

The third mixer 54 also receives the even code whilst the fourth mixer receives the odd code. The output of the third mixer 54 is input to a first correlator 58 while the output of the fourth mixer 56 is output to a second correlator 60. The first correlator 58 correlates the received signal with the even code whilst the second correlator correlates the received signal with the odd code. The first and second correlators are low pass filters.

The outputs of the first and second correlators are input to a fifth mixer 62. The fifth mixer 62 provides three outputs. The corresponding outputs of the correlators processing the Q signal are input to this mixer 52. The first output is II + QQ which input to an integrator 64. This provides long term integration, which is coherent integration. The output is a noise free amplitude output for code tracking control. The remaining small frequency component is cancelled by this operation.

The fifth mixer 62 also provides the output IoddIeven-QoddQeven and -2(IoddQeven + QoddIeven)(this can alternatively be -2(IoddQodd + QevenIeven). Iodd and Qodd represent the output of the first correlator path whilst Ieven and Qeven represent the output of the second correlator path.

The Ioddleven-QoddQeven signal is for the 2f lout signals whilst the -2 (IoddQeven + Qoddleven) is for the 2f Qout signal, where f represents the small remaining frequency component. These two signals are input to a second integrator 66 which provides a 2f frequency tracked output signal. This is used to control the NCO so that the f component in the signal is compensated for and effectively removed.

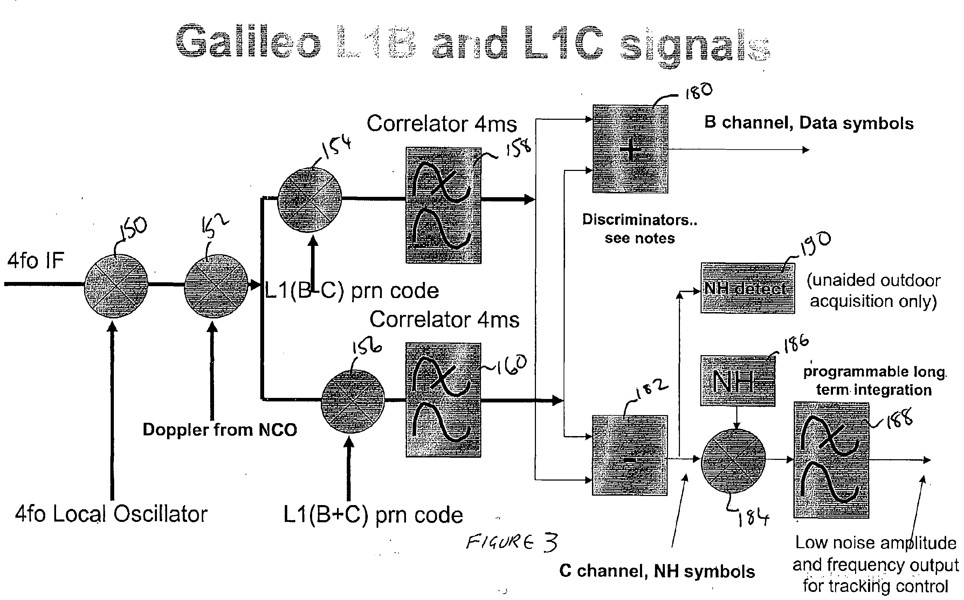

Reference is now made to Figure 3 which shows a second example. As with the first embodiment, the elements for processing the real part I of the signal only are shown. In practice, elements for processing the imaginary part Q of the signal would also be provided.

The received signal having an approximate frequency of 4fo IF is input to a first mixer 150 where the received signal is mixed with a frequency of 4fo from a local oscillator. This is similar to the first mixer of the first embodiment.

As with the first embodiment, the output of the first mixer 150 is input to a second mixer 152 where the down converted signal is mixed with a frequency signal from a NCO to provide an output which has been generally compensated to remove the effects of Doppler shift.

The output of the second mixer 152 is input both to a third mixer 154 and a fourth mixer 156. The output of the second mixer 152 is mixed with the LI (B-C) prn (pseudo random number code) by the third mixer 154. The output of the third mixer 154 is input to a first correlator 158.

The output of the first correlator is input to first and second discriminators 180 and 182.

The output of the second mixer is mixed with the LI (B+C) prn code by the fourth mixer 156. The output of the fourth mixer 160 is input to the second correlator 160. The output of the second correlator is input to the first and second discriminator 180 and 182.

The first discriminator 180 is able to detect the inputs +2, 0 and -2. If b can have the values +1 or -1 and c can have the values +1 or -1, this means that b+c and b-c will have one of the following results: +2, 0 or -2.

**Consider the following example:**

| b-c | b+c | b = data |
|---|---|---|
| +2 | 0 | +1 |
| 0 | +2 | +1 |
| 0 | -2 | -1 |
| -2 | 0 | -1 |

As can be seen depending on the results of the inputs, it can be determined what the b data is. This is done by merging the digit streams. If either of the b-c and b+c is +2 it is determined that the b data is +1. Likewise if either of b-c and b+c is -1, it is determined that the b data is -1.

The second discriminator 182 detects the inputs 2,-2 as being active and 0,0 as being inactive. The second discriminator 182 is arranged to invert one stream (the b+c stream in the example although it could be the b-c in alternative examples) and merge active analogue values. The results are analogue values as a result of noise.

**Consider the following example**

| b-c | b+c | C=amplitude, NH |
|---|---|---|
| +2.5 | 0.5 | +2.5 |
| .6 | +2.7 | -2.7 |
| .7 | -2.6 | +2.6 |
| -2.8 | 0.2 | -2.8 |

In line 1, b-c is detected to have the value of +2.5 and b+c is detected to have the value 0.5. It is then determined that the b-c result is active and the b+c result is inactive and the result is then taken to be 2.5. In line 2, b-c is detected to have the value of .6 while b+c is detected to have the value of +2.7. b-c is determined to be inactive. b+c is inverted and the result is taken to be =2.7. This has the advantage that the noise from the inactive stream is excluded. This can give a 3dB SNR benefit. Additionally the combination of full satellite energy in the active stream gives a 3-6dB gain.

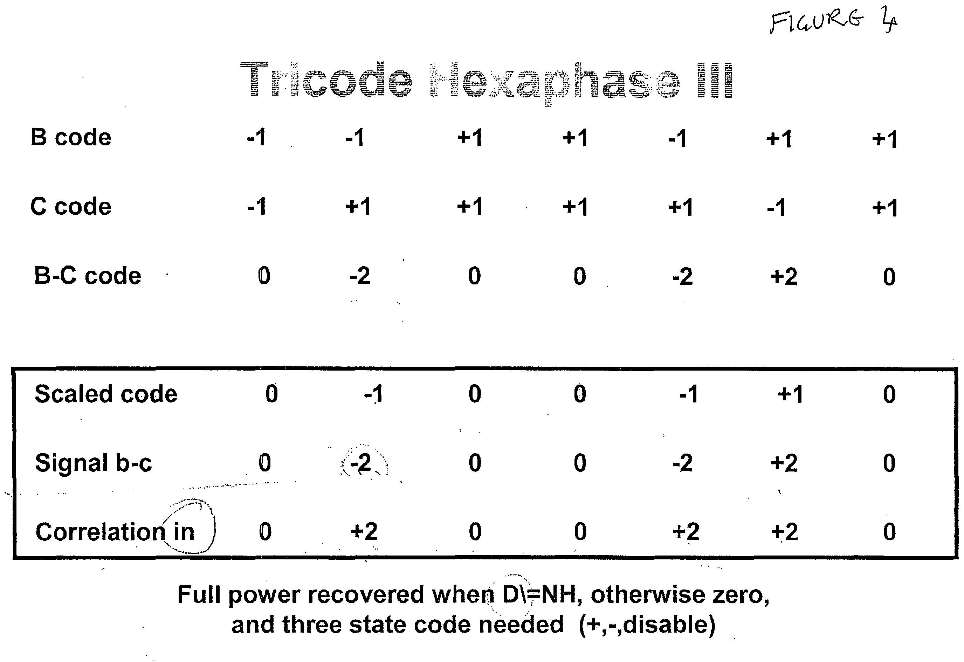

Reference is made to Figure 4 which shows an example of Tricode Hexaphase III according to the prior art. The first line shows an example of a b code of -1 -1 +1 +2 -1 +1 +1. The example c code is shown on line 2 and is -1 +1 +1 +1 +1 -1 +1. b-c is therefore 0 -2 0 0 -2 +2 0 as shown on line 3. This is scaled to 0 -1 0 0 -1 +1 0 as shown in line 4. Line 5 shows b-c again.

The final line shows the results of the inverted correlation 0 +2 0 0 +2 +2 0.

The full power is recovered where the inverse of data is equal to NH otherwise the result is zero. The three states are +, - and disable.

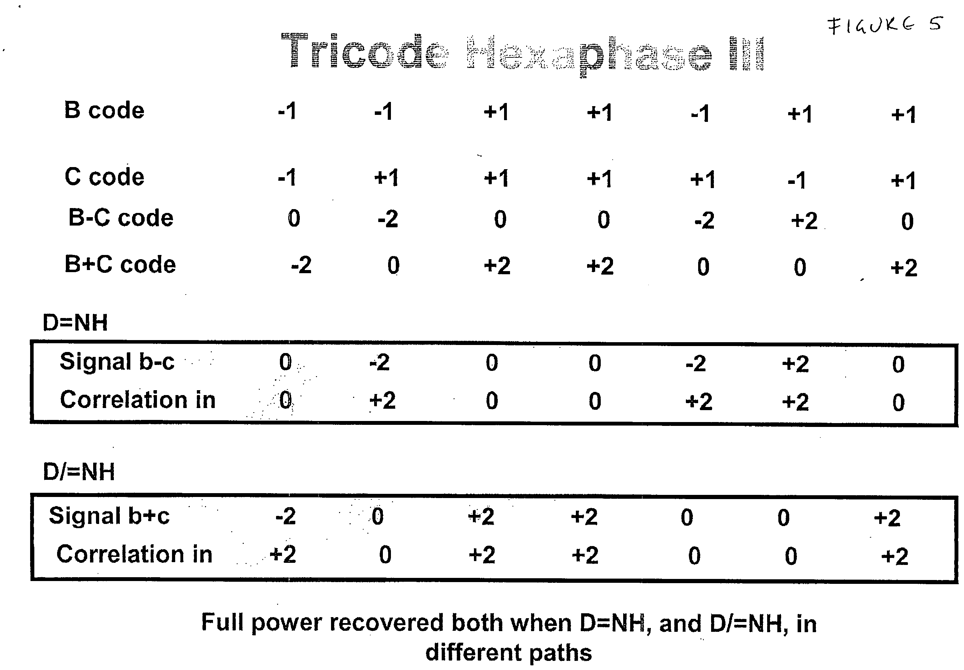

Reference is made to Figure 5 which shows an example of tricode Hexaphase III used in the second example. Lines 1 to 3 are as shown in Figure 4. Lines 5 and 6 are as shown in Figure 5.

Line 4 show the B+C code and line 7 the b+c signal which is - 2 0 +2 +2 0 0 +2. The inverse correlation signal is shown in line 8 and is +2 0 +2 +2 0 0 +2. In other words if b-c is 0, the correlation result is 0 and if the b-c is + or - 2 the result is +2.

As can be seen full power is recovered both when data =NH and when the inverse data=NH using the two different paths. A two state code only is used. The two states are +2 and 0. In other words one of the b+c correlation and the b-c correlation is active when the other is inactive.

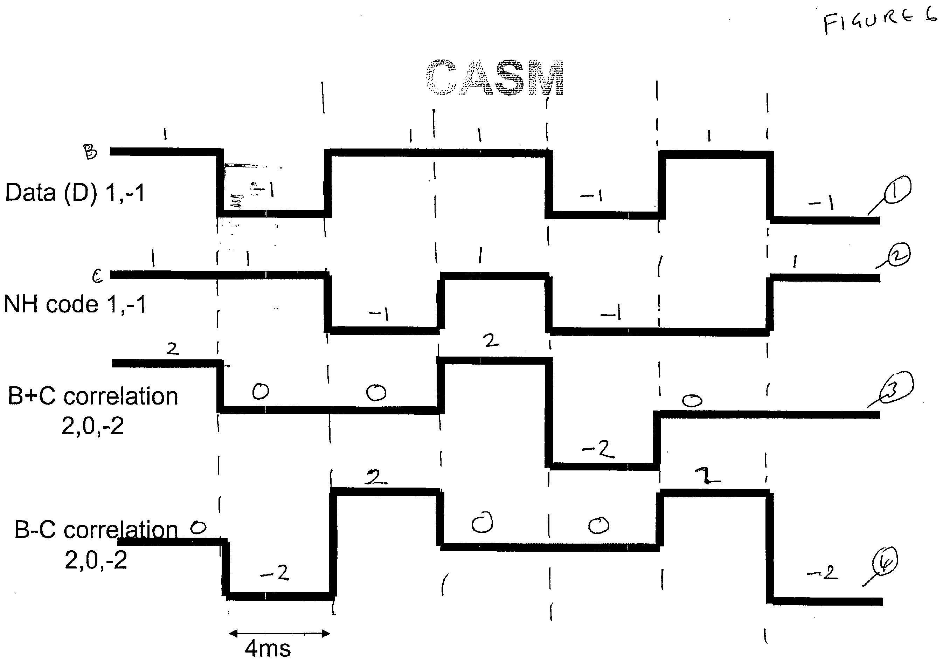

Reference is made to Figure 6 which shows a timing diagram. Signal 1 is the data and can have states + or -1. This corresponds to B. Signal 2 is the NH code and can have the state + or -1. Line 3 shows the B+C correlation which has three states - 2, 0, +2. Line 4 shows the B-C correlation and can have the value 2,0, -2.

It is possible to operate from the b-c correlation alone. The NH symbols can be synchronised for this data. If the signal is +2, the data is +1 and NH is +1. If the signal is -2, then the data is -1, and NH is -1. If the signal is 0 then the data = -NH. This last determination can be made after synchronisation.

Thus, referring back to Figure 3, the output of the second discriminator is thus NH symbols and is provided to a NH detector 190 which can be used for unaided outdoor acquisition. The output of the second discriminator is also input to a fifth mixer 184 which receives an input 186 of locally generated or stored NH codes.

The output of the fifth mixer is input to a correlator 188, again in the form of a low pass filter. This filter is programmable to that the integration period can be varied. As more information becomes available, the period of the integration can be increased. The output of the correlator provides a low noise amplitude and frequency output for frequency control.

Embodiments of the invention have been in the context of the acquisition and tracking of a signal. It should be appreciated that embodiments of the invention may be applied to any other suitable signal.

## Claims

1. A system for processing a received signal having at least one pseudorandom code, PRNorig, applied thereto, said received signal having a frequency, said system comprising:
first correlator circuitry (54, 58) arranged to correlate the received signal with a first code to provide an output;
second correlator circuitry (56, 60) arranged to correlate the received signal with a second code to provide an output; and **characterised by**
processing means (62, 64, 66) for processing the outputs of said first (54, 58) and second (56, 60) correlator circuitry wherein said processing means (62, 64, 66) is arranged to receive the output from said first correlator circuitry (54, 58) and the output from said second correlator circuitry (56, 60) and to perform a multiply operation between the output from said first correlator circuitry and the output from said second correlator circuitry and to integrate the output of the multiply operation to cancel said frequency;
said first code and said second code being different; wherein said first code and second code when interleaved provide PRNorig, such that at any point one code is the same as PRNorig, the other code is 0.

2. A system as claimed in claim 1, wherein processing means (62, 64, 66) is arranged to provide an in-phase and quadrature sum of IaIb + QaQb, where Ia and Qa are provided by said first correlator circuitry (54, 58) and Qb and Ib are provided by said second correlator circuitry (56, 60).

3. A system as claimed in claim 2, wherein said processing means (62, 64, 66) comprises an integrator (64, 66) arranged to integrate said in-phase and quadrature sum to provide an output.

4. A system as claimed in claim 5, wherein the output of the integrator (64, 66) comprises a dc value proportional to the power of the received signal.

5. A system as claimed in any of claims 1 to 4, wherein said processing means (62, 64, 66) is arranged to provide an in-phase and quadrature difference of IaIb-QaQb.

6. A system as claimed in any of claims 1 to 5, wherein said processing means (62, 64, 66) is arranged to provide an output of -2(IxQy+QkIl) where I is an in-phase component and Q is a quadrature component, Ix and Il being provided by said first (54, 58) and second (56, 60) correlator circuitry and one of Qy and Qk being provided by one of said first (54, 58) and second (56, 60) correlator circuitry and the other of Qy and Qk being provided by the other of the first and second correlator circuitry.

7. A system as claimed in 5 or 6, wherein said processing means (62, 64, 66) comprises an integrator (64, 66), said integrator being arranged to receive and integrate at least one of the in-phase and quadrature difference and -2(IQ+QI) output by said multiply operation.

8. An integrated circuit comprising the system as claimed in any preceding claim.

9. A positioning device comprising a system as claimed in any of claims 1 to 7.

10. A positioning device as claimed in claim 9, wherein said device comprises one of a satellite navigation device and a mobile communication device.

11. A method for processing a received signal having at least one pseudorandom code, PRNorig, applied thereto, said received signal having a frequency, said method comprising the steps of:
correlating the received signal with a first code;
correlating the received signal with a second code; and **characterised by**:
processing results of the first and second correlating steps, said processing comprising receiving an output from said received signal correlated with said first code and receiving an output from said received signal correlated with said second code and performing a multiply operation between the output from said first correlator circuitry and the output from said second correlator circuitry, and then integrating the output of the multiply operation to cancel said frequency;
wherein said first code and said second code are different; and wherein said first code and second code when interleaved provide PRNorig, such that at any point one code is the same as PRNorig, the other code is 0.

## Patentansprüche

1. System zum Verarbeiten eines empfangenen Signals, auf das mindestens ein pseudozufälliger Code, PRNorig, angewendet wurde, wobei das empfangene Signal eine Frequenz besitzt, wobei das System Folgendes umfasst:
eine erste Korrelatorschaltungsanordnung (54, 58), die ausgelegt ist, das empfangene Signal mit einem ersten Code zu korrelieren, um eine Ausgabe zu liefern;
eine zweite Korrelatorschaltungsanordnung (56, 60), die ausgelegt ist, das empfangene Signal mit einem zweiten Code zu korrelieren, um eine Ausgabe zu liefern; und **gekennzeichnet durch**
Verarbeitungsmittel (62, 64, 66) zum Verarbeiten der Ausgaben der ersten (54, 58) und der zweiten (56, 60) Korrelatorschaltungsanordnung, wobei die Verarbeitungsmittel (62, 64, 66) ausgelegt sind, die Ausgabe von der ersten Korrelatorschaltungsanordnung (54, 58) und die Ausgabe von der zweiten Korrelatorschaltungsanordnung (56, 60) zu empfangen, eine Multiplikationsoperation zwischen der Ausgabe von der ersten Korrelatorschaltungsanordnung und der Ausgabe von der zweiten Korrelatorschaltungsanordnung auszuführen und die Ausgabe der Multiplikationsoperation zu integrieren, um die Frequenz aufzuheben;
wobei der erste und der zweite Code verschieden sind; wobei der erste Code und der zweite Code, wenn sie verschachtelt sind, einen PRNorig liefern, derart, dass an jedem Punkt, an dem ein Code derselbe wie PRNorig ist, der andere Code 0 ist.

2. System nach Anspruch 1, wobei die Verarbeitungsmittel (62, 64, 66) ausgelegt sind, eine gleichphasige Summe und eine Quadratursumme von IaIb + QaQb zu liefern, wobei Ia und Qa durch die erste Korrelatorschaltungsanordnung (54, 58) und Qb und Ib durch die zweite Korrelatorschaltungsanordnung (56, 60) geliefert werden.

3. System nach Anspruch 2, wobei die Verarbeitungsmittel (62, 64, 66) einen Integrator (64, 66) umfassen, der ausgelegt ist, die gleichphasige Summe und die Quadratursumme zu integrieren, um eine Ausgabe zu liefern.

4. System nach Anspruch 5, wobei die Ausgabe des Integrators (64, 66) einen Gleichstromwert umfasst, der proportional zu der Leistung des empfangenen Signals ist.

5. System nach einem der Ansprüche 1 bis 4, wobei die Verarbeitungsmittel (62, 64, 66) ausgelegt sind, einen gleichphasigen Unterschied und einen Quadraturunterschied von IaIb-QaQb zu liefern.

6. System nach einem der Ansprüche 1 bis 5, wobei die Verarbeitungsmittel (62, 64, 66) ausgelegt sind, eine Ausgabe von -2(IxQy+QkI1) zu liefern, wobei I eine gleichphasige Komponente und Q eine Quadraturkomponente ist, wobei Ix und I1 durch die erste (54, 58) bzw. die zweite (56, 60) Korrelatorschaltungsanordnung geliefert werden eine von Qy und Qk durch die erste (54, 56) oder die zweite (56, 60) Korrelatorschaltungsanordnung geliefert wird und die andere von Qy und Qk durch die andere der ersten und der zweiten Korrelatorschaltungsanordnung geliefert wird.

7. System nach Anspruch 5 oder 6, wobei die Verarbeitungsmittel (62, 64, 66) einen Integrator (64, 66) umfassen, wobei der Integrator ausgelegt ist, den gleichphasigen Unterschied und/oder den Quadraturunterschied und/oder -2(IQ+QI), das durch die Multiplikationsoperation ausgegeben wird, zu integrieren.

8. Integrierte Schaltung, die das System nach einem des vorhergehenden Anspruch umfasst.

9. Positioniervorrichtung, die ein System nach einem der Ansprüche 1 bis 7 umfasst.

10. Positioniervorrichtung nach Anspruch 9, wobei die Vorrichtung eine Satellitennavigationsvorrichtung oder eine mobile Kommunikationsvorrichtung umfasst.

11. Verfahren zum Verarbeiten eines empfangenen Signals, auf das mindestens ein pseudozufälliger Code, PRNorig, angewendet wurde, wobei das empfangene Signal eine Frequenz besitzt, wobei das Verfahren die folgenden Schritte umfasst:
Korrelieren des empfangenen Signals mit einem ersten Code;
Korrelieren des empfangenen Signals mit einem zweiten Code; und **gekennzeichnet durch**:
Verarbeiten der Ergebnisse des ersten und des zweiten Korrelationsschritts, wobei die Verarbeitung umfasst, eine Ausgabe von dem mit dem ersten Code korrelierten empfangenen Signal zu empfangen und eine Ausgabe von dem mit dem zweiten Code korrelierten empfangenen Signal zu empfangen und eine Multiplikationsoperation zwischen der Ausgabe von der ersten Korrelatorschaltungsanordnung und der Ausgabe von der zweiten Korrelatorschaltungsanordnung auszuführen,
und dann Integrieren der Ausgabe der Multiplikationsoperation, um diese Frequenz aufzuheben;
wobei der erste Code und der zweite Code verschieden sind; und wobei der erste Code und der zweite Code, wenn sie verschachtelt sind, einen PRNorig liefern, derart, dass an jedem Punkt, an dem ein Code derselbe wie PRNorig ist, der andere Code 0 ist.

## Revendications

1. Système de traitement d'un signal reçu ayant au moins un code pseudo-aléatoire, PRNorig, appliqué à celui-ci, ledit signal reçu ayant une fréquence, ledit système comprenant :
un premier circuit de corrélation (54, 58) conçu de façon à corréler le signal reçu avec un premier code pour fournir une sortie ;
un second circuit de corrélation (56, 60) conçu de façon à corréler le signal reçu avec un second code pour fournir une sortie ; et **caractérisé par**
un moyen de traitement (62, 64, 66) permettant de traiter les sorties desdits premier (54, 58) et second (56, 60) circuits de corrélation dans lequel ledit moyen de traitement (62, 64, 66) est conçu de manière à recevoir la sortie à partir dudit premier circuit de corrélation (54, 58) et la sortie à partir dudit second circuit de corrélation (56, 60), et à effectuer une opération de multiplication entre la sortie à partir dudit premier circuit de corrélation et la sortie à partir dudit second circuit de corrélation, et de manière à intégrer la sortie de l'opération de multiplication pour annuler ladite fréquence ;
ledit premier code et ledit second code étant différents ; dans lequel lesdits premier code et second code, lorsqu'ils sont entrelacés, fournissent un PRNorig, de sorte qu'à n'importe quel point, un code est le même qu'un PRNorig, l'autre code est 0.

2. Système selon la revendication 1, dans lequel le moyen de traitement (62, 64, 66) est conçu de manière à prévoir une somme en quadrature et en phase de IaIb + QaQb, où Ia et Qa sont prévus par ledit premier circuit de corrélation (54, 58) et Qb et Ib sont prévus par ledit second circuit de corrélation (56, 60).

3. Système selon la revendication 2, dans lequel ledit moyen de traitement (62, 64, 66) comprend un intégrateur (64, 66) conçu de manière à intégrer ladite somme en quadrature et en phase pour prévoir une sortie.

4. Système selon la revendication 5, dans lequel la sortie de l'intégrateur (64, 66) comprend une valeur cc proportionnelle à la puissance du signal reçu.

5. Système selon l'une quelconque des revendications 1 à 4, dans lequel ledit moyen de traitement (62, 64, 66) est conçu pour fournir une différence de quadrature et en phase de IaIb-QaQb.

6. Système selon l'une quelconque des revendications 1 à 5, dans lequel ledit moyen de traitement (62, 64, 66) est conçu pour fournir une sortie de -2(IxQy+QkI1) où I est un composant en phase et Q est un composant en quadrature, Ix et I1 étant prévus par lesdits premier (54, 58) et second (56, 60) circuits de corrélation et l'un de Qy et Qk étant prévu par l'un d'un premier (54, 58) et second (56, 60) circuit de corrélation, et l'autre de Qy et Qk étant prévu par l'autre du premier et du second circuit de corrélation.

7. Système selon la revendication 5 ou 6, dans lequel ledit moyen de traitement (62, 64, 66) comprend un intégrateur (64, 66), ledit intégrateur étant conçu de manière à recevoir et intégrer au moins une de la différence en quadrature et en phase et une sortie - 2(IQ+QI) par ladite opération de multiplication.

8. Circuit intégré comprenant le système selon l'une quelconque des revendications précédentes.

9. Dispositif de positionnement comprenant un système selon l'une quelconque des revendications 1 à 7.

10. Dispositif de positionnement selon la revendication 9, dans lequel ledit dispositif comprend l'un d'un dispositif de navigation par satellite et d'un dispositif de communication mobile.

11. Procédé de traitement d'un signal reçu ayant au moins un code pseudo-aléatoire, PRNorig, appliqué à celui-ci, ledit signal reçu ayant une fréquence, ledit procédé comprenant les étapes consistant à :
corréler le signal reçu avec un premier code ;
corréler le signal reçu avec un second code ;
et **caractérisé par** :
traiter les résultats des première et seconde étapes de corrélation, ledit traitement consistant à recevoir une sortie à partir dudit signal reçu corrélé avec ledit premier code et à recevoir une sortie dudit signal reçu corrélé avec ledit second code, et à effectuer une opération de multiplication entre la sortie à partir dudit premier circuit de corrélation et la sortie à partir dudit second circuit de corrélation, et ensuite à intégrer la sortie de l'opération de multiplication pour annuler ladite fréquence ;
dans lequel ledit premier code et ledit second code sont différents ; et dans lequel lesdits premier code et second code, lorsqu'ils sont entrelacés, fournissent un PRNorig, de sorte qu'à n'importe quel point, un code est le même qu'un PRNorig, l'autre code est 0.
